Europäisches Patentamt

**European Patent Office**

Office européen des brevets

(11) Numéro de publication: **0 427 138 A1**

## DEMANDE DE BREVET EUROPEEN

(21) Numéro de dépôt: **90121034.4**

(51) Int. Cl.5: **B60L 3/10**

(22) Date de dépôt: **02.11.90**

(30) Priorité: **08.11.89 FR 8914666**

(43) Date de publication de la demande:
**15.05.91 Bulletin 91/20**

(84) Etats contractants désignés:
**AT BE CH DE ES FR GB IT LI NL SE**

(71) Demandeur: **GEC ALSTHOM SA**
**38, avenue Kléber**
**F-75116 Paris(FR)**

(72) Inventeur: **Jobard, Thierry**
**14, rue Pailleron**
**F-69004 Lyon(FR)**

(74) Mandataire: **Weinmiller, Jürgen et al**
**Lennéstrasse 9 Postfach 24**
**W-8133 Feldafing(DE)**

(54) **Procédés d'antipatinage ou d'antienrayage pour véhicule à traction électrique, et application à la détection de patinage ou d'enrayage, et à la mesure d'adhérence, pour un tel véhicule.**

(57) Un procédé d'antipatinage ou d'antienxayage pour véhicule à traction électrique dont la chaîne de traction comporte un asservissement d'un, ou de plusieurs paramètres(s) de pilotage du, ou des, moteurs(s) de cette chaîne de traction à une consigne d'entrée, est tel que le, ou les, paramètres(s) de pilotage obtenus(s) en sortie de cet asservissement sont limités en permanence par des valeurs, dites théoriques, de ce, ou ces, paramètres-(s) de pilotage, qui sont celles qui permettraient d'obtenir la consigne d'entrée pour une vitesse de rotation du, ou des, moteurs(s) égale à la vitesse réelle de déplacement du véhicule, appelée vitesse de référence, de façon à réaliser une stabilisation du couple transmis par ce ou ces moteurs en cas de patinage ou d'enrayage.

FIG. 8

EP 0 427 138 A1

# PROCÉDÉS D'ANTIPATINAGE OU D'ANTIENRAYAGE POUR VÉHICULE À TRACTION ÉLECTRIQUE, ET APPLICATION À LA DÉTECTION DE PATINAGE OU D'ENRAYAGE, ET À LA MESURE D'ADHÉRENCE, POUR UN TEL VÉHICULE.

La présente invention concerne la cortffande des moteurs de à transmission électrique (cas des véhicules diesel-électriques).

Actuellement, les chaînes de traction électriques sont pilotées en asservissement de couple ou de courant, c'est-à-dire que le système de pilotage essaie en permanence d'obtenir, du ou des moteur (5) électrique (5) qu'il pilote, un couple ou un courant égal à la consigne qui lui est donnée. Si cette consigne conduit à un effort supérieur à celui que peut transmettre au sol la chaîne mécanique (cas d'une adhérence dégradée, par exemple du fait de mauvaises conditions météorologiques) il se produit un patinage des roues si on est en traction, ou un enrayage si on est en freinage. Actuellement, pour combattre ces phénomènes, on ajoute un système, dit d'antipatinage, ou d'antienrayage, qui corrige la consigne en provenance du manipulateur de conduite (ou du pilotage automatique), pour n'envoyer au système de pilotage de la chaîne de traction qu'une consigne inférieure ou égale au couple que permet de transmettre l'adhérence.

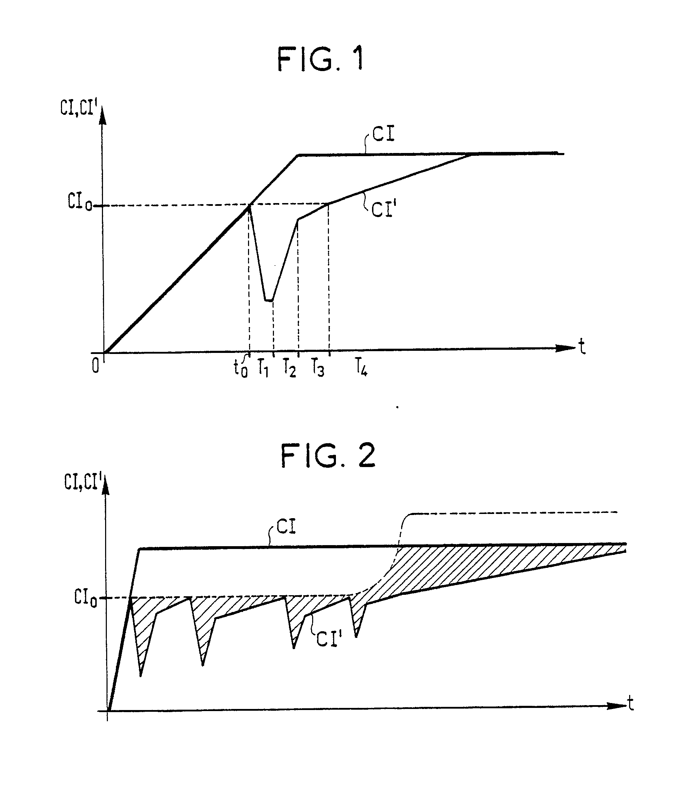

Ce système d'antipatinage ou d'antienrayage, qui peut être soit un système électronique analogique, soit un logiciel dans une commande à microprocesseur, nécessite la connaissance:
- des vitesses des roues entraînées par la chaîne de traction considérée,
- d'une vitesse de référence qui représente la vitesse réelle de déplacement du véhicule et qui peut être, soit mesurée sur une roue ou un essieu sous-motorisé ou non motorisé (donc qui ne présente aucun risque de patiner) et sous-freiné ou non freiné (donc qui ne présente aucun risque d'enrayer), soit mesurée par un autre dispositif, par exemple à effet Doppler, soit encore calculée (comme décrit par exemple dans le brevet français 2 512 556) à partir de toutes les vitesses des roues du véhicule (intégration d'une accélération moyenne plausible pour le véhicule, majoration par la plus petite des vitesses des roues en traction et minoration par la plus grande en freinage). A partir de ces informations, ce système d'antipatinage ou d'antienrayage calcule et filtre les écarts de chacune des vitesses par rapport à la vitesse de référence, les accélérations de chacune élabore un signal de patinage ou d'enrayage à partir de toutes ces grandeurs, qui sert à corriger la consigne en provenance âu manipulateur. Cette correction s'effectue de la façon suivante, illustrée sur la figure 1 qui représente la consigne d'entrée CI et la consigne corrigée CI' en fonction du temps:
- en traction, dès qu'un début de patinage est détecté, soit à un instant repéré $t_o$ sur la figure 1. la consigne $Ct_o$ présente à l'instant d'apparition du patinage est brusquement et fortement diminuée, de façon à faire reprendre adhérence aux roues qui l'ont perdue (phase repérée $T_1$ sur la figure 1), puis réaugmentée rapidement jusqu 'à une valeur légèrement inférieure à celle qu'avait la consigne à l'instant d'apparition du patinage (phase $T_2$), ensuite réaugmentée lentement jusqu'à cette valeur (phase T3), enfin réaugmentée très lentement jusqu 'à rattraper la consigne d'entrée (phase T4). Evidemment, tout ce phénomène est réinitialisé à chaque nouvelle détection de patinage.
- en freinage, la consigne est corrigée de façon que le glissement de chaque roue reste toujours limité à une certaine valeur, en général entre 10 et 20 de la vitesse de référence. Cette technique d'antipatinage ou d'antienrayage présente les inconvénients suivants:
- Elle est assez complexe. Les traitements effectués, qui n'ont été décrits que de façon simplifiée précédemment, sont compliqués, ce qui a pour conséquence que, s'ils sont réalisés par de l'électronique analogique, ils nécessitent beaucoup de circuits, donc représentent un équipement volumineux et coûteux, et s'ils sont réalisés par un logiciel intégré dans une commande électronique à microprocesseur, ce logiciel est long, donc peut imposer d'accroître la taille mémoire de la carte électronique où il est implanté et surtout prend un temps d'éxécution qui peut être très pénalisant dans un système "temps réel".
- Elle impose de mesurer, de façon précise, les vitesses de toutes les roues ou de tous les essieux entraînés par la chaîne de traction.
- Elle provoque des contraintes mécaniques importantes pour la répétées, rapides et profondes sur le couple réalisé.
- Elle est fonction de la réponse des asservissements de la chaîne de traction, qui est en aval et qui est plus ou moins rapide, ce qui impose de nombreux réglages et mises au point du dispositif sur le véhicule lui-même.
- En traction, d'après le principe-même décrit précédemment, elle ne garantit pas l'utilisation maximale de l'adhérence disponible $CI_o$, ainsi que le montre la figure 2 qui représente également la consigne d'entrée CI et la consigne corrigée CI' en fonction du temps:

EP 0 427 138 A1

. à cause des "trous" dans la consigne (cf zones hâchurées sur cette figure), pour faire reprendre adhérence aux roues,

. a cause de la lenteur à laquelle la consigne corrigée rattrape la consigne d'entrée lorsque l'adhérence redevient bonne (par exemple entrée dans un tunnel après une zone de pluie).

La présente invention a pour objet différents procédés d'antipatinage ou d'antienrayage permettant d'éviter ces inconvénients, et reposant sur une même idée : utiliser la décroissance naturelle de la caractéristique de couple en fonction de la vitesse des moteurs électriques lorsque certains des paramètres de la source qui les alimente sont maintenus constants.

Un premier objet de l'invention consiste en un procédé d'antipatinage ou d'antienrayage pour véhicule à traction électrique dont la chaîne de traction comporte un asservissement d'un ou de plusieurs paramètre (s) de pilotage du, ou des, moteur(s) de cette chaîne de traction à une consigne d'entrée, ledit procédé étant essentiellement caractérisé en ce que le, ou les, paramètre(s) de pilotage obtenu(s) en sortie de cet asservissement sont limités en permanence par des valeurs dites théoriques, de ce, ou ces, paramètre(s) de pilotage, qui sont celles qui permettraient d'obtenir la consigne d'entrée pour une vitesse de rotation du, ou des, moteur(s) égale à la vitesse réelle de déplacement du véhicule, appelée vitesse de référence, de façon à réaliser une stabilisation du couple transmis par ce ou ces moteurs en cas de patinage ou d'enrayage.

Suivant un mode de réalisation de l'invention, le ou les paramètres de pilotage obtenus en sortie de cet asservissement sont limités en permanence à ces valeurs théoriques, de façon à réaliser, en cas de patinage ou d'enrayage, une stabilisation du couple transmis par ce ou ces moteurs à une valeur correspondant à celle que permet de transmettre l'adhérence disponible Suivant un autre mode de réalisation de l'invention, au bout d'une durée déterminée au cours de laquelle la ou les valeurs théoriques ont été sélectionnées pour application au moteur en remplacement de la ou des sorties de cet asservissement, ces valeurs théoriques sont remplacées par des valeurs destinées à éviter le léger patinage entretenu par le fonctionnement à l'adhérence disponible.

Un autre objet de l'invention consiste en l'application de ces procédés à la détection de patinage ou d'enr'ayage des roues d'un véhicule à traction électrique, ladite détection étant obtenue par détection de l'instant où lesdites valeurs limitant le ou les paramètres de pilotage obtenus en sortie de l'asservissement de façon à réaliser une stabilisation du couple transmis par ce ou ces moteurs en cas de patinage ou d'enrayage, dites valeurs limitantes, sont sélectionnées pour application au moteur en remplacement de la ou des sorties de cet asservissement.

Un autre objet de l'invention consiste en l'application de ces procédés à la mesure d'adhérence des roues d'un véhicule à traction électrique, ladite mesure étant obtenue, dans le cas où lesdites valeurs limitantes sont constituées par lesdites valeurs théoriques, par comparaison de la consigne de couple et du couple réellement obtenu, l'adhérence disponible étant supérieure ou égale à celle que permet de transmettre la consigne de couple en cas d'égalité, ou inférieure à celle-ci au cas où le couple réel est inférieur à la consigne, le couple réel indiquant dans ce dernier cas l'adhérence disponible.

Un autre objet de l'invention consiste en un procédé d'antipatinage ou d'antienrayage pour véhicule à traction électrique dont la chaîne de traction comporte un asservissement d'un ou plusieurs paramètres de pilotage du ou des, moteurs de cette chaîne à préalable de patinage ou d'enrayage, et étant essentiellement caractérisé en ce qu'il comporte un blocage de la ou des sorties de cet asservissement en cas de détection de patinage ou d'enrayage.

D'autres objets et caractéristiques de la présente invention apparaîtront plus clairement à la lecture de la description suivante d'exemples de réalisation, faite en relation avec les dessins ci-annexés dans lesquels, outre les figures I et 2 déjà décrites, relatives à l'art antérieur, - la figure 3 rappelle le schéma de principe d'une chaîne de traction électrique à moteur à courant continu à excitation séparée fonctionnant en traction, - la figure 4 rappelle la forme de la caractéristique de couple en fonction de la vitesse de rotation d'un moteur à courant continu à excitation séparée. - la figure 5 rappelle le schéma d'une chaîne de traction électrique à moteur à courant continu à excitation séparée fonctionnant en freinage. - la figure 6 rappelle la caractéristique de couple en fonction de la vitesse de rotation d'un moteur asynchrone alimenté par un onduleur de tension. - la figure 7 rappelle la forme de la caractéristique de couple en fonction de la vitesse de rotation d'un moteur à courant continu à excitation série. - la figure 8 représente un premier exemple de mise en oeuvre d'un procédé d'antipatinage ou d'antienrayage suivant l'invention, applicable au cas de moteurs à courant continu à excitation séparée. - la figure 9 représente un second exemple de mise en oeuvre d'un procédé d'antipatinage ou d'antienrayage suivant l'invention, applicable au cas de moteurs asynchrones alimentés par un onduleur de tension.

Les différents objets de l'invention peuvent donner lieu à plusieurs modes de réalisation, notamment suivant le type de moteurs utilisés. Les modes de réalisations décrits ci-après correspondent plus

3

particulièrement aux deux types de moteurs les plus utilisés aujourd'hui dans les nouvelles chaînes de traction électrique, à savoir les moteurs à courant continu à excitation séparée et les moteurs asynchrones alimentés par un onduleur de tension.

On décrit tout d'abord l'application d'un procédé d'antipatinage ou d'antienrayage suivant l'invention à une chaîne de traction électrique à moteur à courant continu à excitation séparée, et on considère dans un premier temps le cas de l'antipatinage.

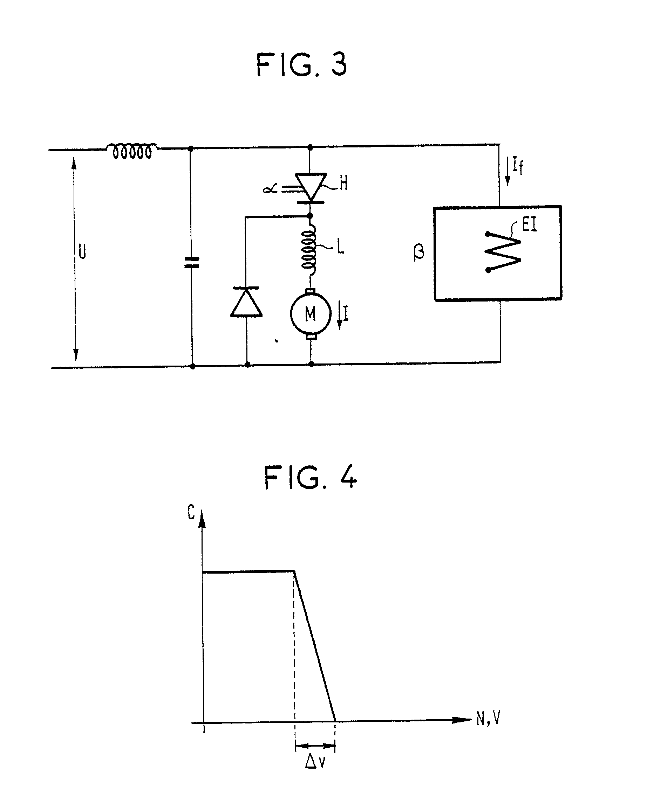

La figure 3 représente le schéma de principe simplifié d'une chaîne de traction à moteur à courant continu M (pouvant être en fait la mise en série ou en parallèle de plusieurs moteurs) alimenté par un hâcheur H et dont l'enroulement inducteur EI est alimenté à partir de la même source de tension continue U que l'enroulement d'induit par un autre hâcheur ou pont d'excitation.

Si E désigne la f.c.é.m. développée par le moteur, $\alpha$ le rapport d'ouverture du hâcheur d'induit et r la résistance de la self de lissage L et de l'induit du moteur M, le courant induit 1 est donné par la relation:

$$I = \frac{\alpha U - E}{r}$$

La f.c.é.m. E est proportionnelle à la vitesse de rotation N du moteur M et au flux $\phi$ dans la machine, lui-même fonction du courant d'excitation If donné par l'angle d'ouverture $\beta$ du pont d'excitation:

E = K.N. $\phi(\beta)$: rapport constant, dépendant du moteur) Ces deux relations montrent que si $\alpha$ et $\beta$ restent constants, si la vitesse de rotation N du moteur augmente (à cause d'un patinage de la roue ou de l'essieu qu'il entraîne), le courant 1, donc le couple développé par le moteur, diminue. La caractéristique de couple C en fonction de la vitesse de rotation N a l'allure indiquée sur la figure 4. La résistance r étant en général très faible, la pente de cette caractéristique est importante. L'invention exploite cette caractéristique. L'un des procédés d'antipatinage suivant l'invention, qui est maintenant décrit, réalise l'asservissement classique du couple ou du courant induit en fonction de la consigne d'entrée, ce qui détermine un rapport d'ouverture $\alpha$ du hâûcher, mais il limite ensuite ce rapport à la valeur théorique de $\alpha$ qui donnerait le courant désiré (c'est-àdire égal à la consigne) si le moteur tournait à une vitesse correspondant à la vitesse de référence du véhicule $V_{réf}$ (donc si la roue ou l'essieu entraîné par ce moteur ne patinait pas). Ainsi, la différence de vitesse entre la roue entraînée par le moteur et la vitesse de référence du véhicule ne pourra jamais devenir supérieure au $\Delta$ v indiqué sur la caractéristique de couple en fonction de la vitesse de rotation du moteur représentée sur la figure 4 (elle ne l'atteindrait même que si l'adhérence devenait strictement nulle). Cette valeur théorique de $\alpha$, appelée $\alpha_{th}$, est calculée de la façon suivante:

$$\alpha_{th} = \frac{r.C_I + E_{réf}}{U}$$

où $C_I$ est la consigne d'entrée de courant induit et $E_{réf} = kN_{réf}. \phi_c$,

où Nref est la vitesse de rotation du moteur correspondant à la vitesse de référence du véhicule, et $\phi_c$ le flux correspondant au couple désiré. $\phi_c$ est donné par la caractéristique du moteur, en fonction du courant d'excitation If . Il est fonction du mode de pilotage choisi; à flux maximal ou à image série par exemple, on a alors :

$I_f$ = constante = $I_{fmax}$ ou $I_f$ = k. $C_I$ ce qui donne $\phi_c$. L'application au moteur de cette valeur $\alpha_{th}$ fait que le couple transmis se stabilise forcément à la valeur que permet de transmettre l'adhérence. On peut s'en convaincre par une démonstration par l'absurde : si le couple transmis était inférieur à celui que permet l'adhérence, la roue ralentirait (elle cesserait de patiner), donc le couple augmenterait. S'il était au contraire supérieur à celui que permet l'adhérence, la roue accélèrerait (patinerait plus vite) et le couple diminuerait. Le couple se stabilise donc de façon continue à l'adhérence disponible et il la suit instantanément si celle-ci varie. Lorsque la vitesse de définition du moteur est atteinte, c'est-à-dire lorsque $\alpha$a atteint sa valeur limite $\alpha_{max}$ (on notera que l'on peut avoir $\alpha_{max} = 1$ si l'on passe en conduction continue), classiquement le courant induit est encore asservi à la consigne en faisant diminuer le courant d'excitation $I_f$, donc le flux $\phi$ au fur à mesure que la vitesse augmente, de telle manière que la f.c.é.m du moteur :

E = K.N. $\phi$ reste constante, donc que

$$I = \frac{\alpha_{max}. U - E}{r}$$

reste également constant. Là encore, pour éviter d'entretenir un éventuel patinage, on calculera un courant d'excitation théorique $I_{fth}$ qui interviendra comme minorant de $I_f$ dans l'asservissement, ce courant d'excitation théorique étant calculé de la façon suivante :
- calcul de la f.c.é.m théorique $E_{th}$ à partir de la consigne d'entrée de courant induit, suivant l'expression:

$E_{th} = \alpha_{max}U - r.C_I$ - calcul du flux théorique $\phi_{th}$ à partir de la f.c.é.m. théorique $E_{th}$, suivant l'expression :

$$\phi_{th} = \frac{E_{th}}{K.N_{ref}}$$

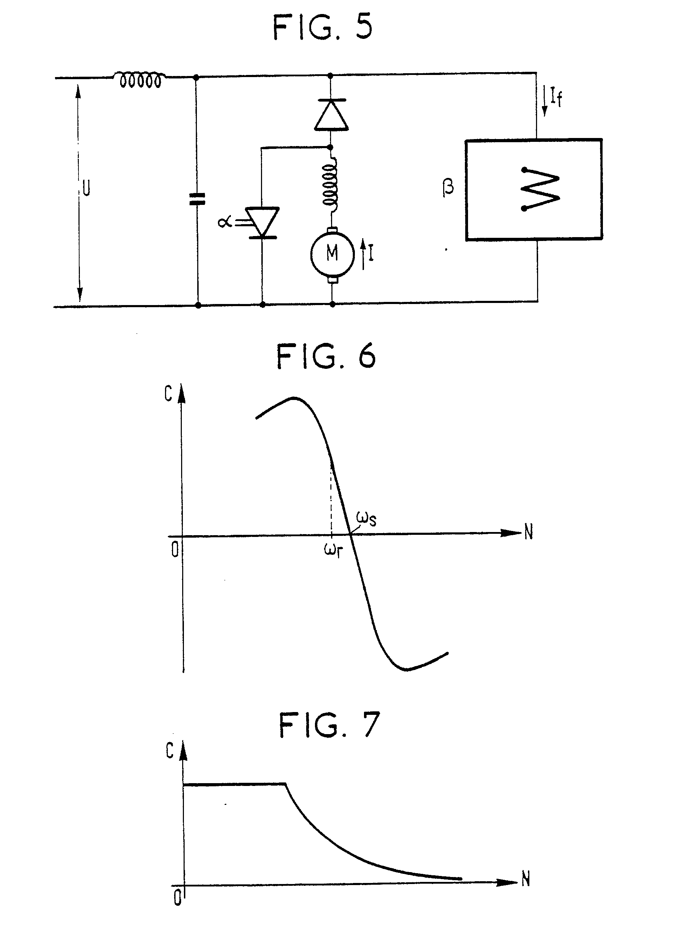

fonction de la vitesse de référence.
- déduction du courant d'excitation théorique $I_{fth}$, à partir du flux théorique $\phi_{th}$, d'après la caractéristique du moteur. En fait, pour ne pas gêner l'asservissement classique lorsqu'il n'y a pas de patinage, c'est-à-dire pour tenir compte des incertitudes de mesure et de calcul sur les différentes grandeurs en jeu, on calculera plutôt $\alpha_{th}$ et $I_{fth}$ en prenant une vitesse légèrement supérieure à $N_{réf}$, c'est-à-dire qu'on remplacera, dans les formules précédentes, $N_{réf}$ par a $N_{réf}$ + b, avec a≧1, b≧o, a et b étant choisis en fonction du glissement des roues que l'on tolère. Il est par ailleurs possible d'appliquer au moteur une valeur inférieure à la valeur $\alpha_{th}$, auquel cas le couple transmis se stabilise à une valeur inférieure à celle que permet de transmettre l'adhérence. Pour englober les différents modes possibles de limitation du rapport d'ouverture $\alpha$ de sortie de l'asservissement qui viennent valeur théorique $\alpha_{th}$, la notion de limitation "à" cette valeur théorique étant réservée au cas d'égalité entre la valeur limitante et cette valeur théorique $\alpha_{th}$, cas dans lequel on se placera plus fréquemment dans ce qui suit. On considère maintenant, toujours dans le cas d'une chaîne de traction électrique à moteur à courant continu à excitation séparée, le cas de l'antienrayage. La figure 5 représente le schéma de principe simplifié de la même chaîne de traction, mais configurée en freinage électrique à récupération.
On a alors la relation :

$$I = \frac{E - (1-\alpha)U}{r}$$

E étant ici la f.é.m. du moteur fonctionnant en génératrice. Un raisonnement analogue au précédent montre qu'il faut ici majorer le rapport $\alpha$ par la valeur :

$$\alpha_{th} = \frac{r\,C_I + U - E_{th}}{U}$$

avec $E_{th} = K. N_{réf}. \phi_c$ ( $\phi_c$ étant le flux désiré, suivant le mode de pilotage, en général ici le flux maximal). En freinage à haute vitesse, lorsque le hâcheur reste en ouverture minimale ($\alpha = \alpha_{min}$, $\alpha_{min}$ min pouvant être égal à 0 si l'on fonctionne en hâheur bloqué) et lorsque le courant 1 est contrôlé uniquement par l'excitation, on majorera le courant inducteur $I_f$ par la valeur théorique $I_{fth}$ calculée par:
- calcul de la f.é.m. théorique $E_{th}$ à partir de la consigne $C_I$, par la relation:

$E_{th} = r.C_I + (1- \alpha_{min})U$
- calcul du flux théorique $\pi_{th}$ à partir de la f.é.m. théorique $E_{th}$, par la relation :

$$\phi_{th} = \frac{E_{th}}{K.N_{ref}}$$

- déduction du courant d'excitation théorique $I_{fth}$ à partir du flux théorique $\phi_{th}$, d'après la caractéristique du moteur. Pour les mêmes raisons qu'en traction et aussi pour tolérer un certain glissement des roues (qui peut avoir un effet nettoyant de la surface de roulement favorable pour les roues suivantes du véhicule), on pourra remplacer dans les formules précédentes $N_{réf}$ par : $cN_{réf}$ + d avec ici c≦1 et ≦d 0. Bien entendu il convient d'antisaturer l'asservissement lorsque, pour le fonctionnement en traction par exemple, th est strictement inférieur à$\alpha_1$ ou $I_{fth}$ strictement supérieur à $C_{If1}$. De plus, ces calculs peuvent être faits en prenant pour U une mesure filtrée de la tension d'entrée, afin d'éviter de créer des instabilités. On décrit maintenant l'application du procédé décrit précédemment à une chaîne de traction électrique à moteur asynchrone alimenté par un onduleur de tension. Ici, classiquement, une telle chaîne de traction est pilotée de la façon suivante : un asservissement de couple fournit un écart $\Delta f$ de fréquence. On ajoute alors à la fréquence $f_r$ mesurée de rotation du rotor du moteur la fréquence $\Delta f$ donnée par l'asservissement de couple pour obtenir la fréquence $f_s$ à laquelle on alimente les enroulements du stator du moteur. Puis on en déduit la tension à appliquer au moteur par un simple rapport de proportionnalité

$$(\frac{V}{f_s} = constante),$$

majorée par la tension que peut délivrer la
la source.

Les grandeurs Y et $f_s$ servent alors à l'élaboration des instants d'allumage des thyristors, ou GTO, de l'onduleur de tension. Le procédé s'appuie ici encore sur la caractéristique de couple du moteur asynchrone en fonction de sa vitesse de rotation, ou plutôt de son glissement :

$$g = \frac{\omega_s - \omega_r}{\omega_s}$$

(avec $\omega = 2\pi f$) :

$$C = 3.p.\ V^2 \frac{\frac{Rr}{g.\omega_s}}{(Rs + \frac{Rr}{g})^2 + (L.\omega_s)^2}$$

avec : p nombre de paires de pôles de la machine
V: tension entre phases
$R_r$ : résistance du rotor
$R_s$ : résistance du stator
L : inductance de la self de fuite laquelle a l'allure donnée par la figure 6. Le procédé consiste ici à limiter $f_s$, en traction, à : $f_{sth} = f_{rth} + \Delta f_{th}$, expression dans laquelle $f_{rth} = a\ f_{rref} + b$, a et b étant à choisir suivant le glissement des roues toléré (a 7,1, b≧0 ) et $f_{r\ réf}$ étant la fréquence du rotor qui correspondrait à la vitesse de référence du véhicule, et où $\Delta f_{th}$ est calculée de la façon suivante :

Pour les faibles valeurs de glissement, c'est-à-dire dans la zone normale d'utilisation du moteur, l'expression du couple en fonction de la fréquence glissée $f_s - f_r = \Delta f$ est de la forme :

$$C \simeq k.\left(\frac{V}{f_s}\right)^2 . \Delta f$$

Le pilotage des moteurs se faisant

$$\text{à } \frac{V}{f_s} = constante,$$

on peut en
déduire la fréquence glissée théorique correspondant au couple désiré C :

$$\Delta f_{th} = \frac{c}{k \cdot \left(\dfrac{V}{f_s}\right)^2}$$

On prendra en fait un $\Delta f_{th}$ légèrement majoré par rapport au résultat de ce calcul. En freinage, où classiquement on calcule $f_s = f_r - \Delta f$, on minorera ici $f_s$ par $f_{sth} = f_{rth} - \Delta f_{th}$ avec

$$f_{rth} = c\, f_{r_{réf}} + d$$

(avec $c \leq 1$, $d \leq 0$)

Le procédé qui vient d'être décrit présente les avantages suivants:

- Il rend inutile le dispositif d'antipatinage et/ou d'antienrayage utilisé actuellement. Comme il conduit à des calculs beaucoup plus simples, il nécessite beaucoup moins de circuits électroniques dans une commande électronique analogique, ou un logiciel beaucoup plus court, donc plus rapide aussi en exécution, dans une commande à microprocesseur. Il est donc moins encombrant et moins coûteux.

- Il impose de connaître seulement la vitesse de référence du véhicule, mais n'impose pas la mesure de chacune des vitesses des roues ou des essieux entraînés par la chaîne de traction (sauf bien sûr si la vitesse de référence doit être calculée à partir des vitesses des autres roues).

- La réponse du système est fonction uniquement de la caractéristique de couple de la chaîne de traction pilotée et des coéfficients a, b, c, d évoqués ci-avant. Seul le choix de ces coéfficients, qui déterminent la vitesse de glissement des roues, pourra faire l'objet d'une validation sur le véhicule, mais les essais sur celui-ci seront réduits.

- Par principe, le couple transmis se stabilisant de façon continue à la valeur que permet de transmettre l'adhérence, et suivant celle-ci instantanément si elle varie, ce procédé garantit une totale utilisation de l'adhérence.

- En maintenant un certain glissement des roues par rapport à leur surface de roulement, il entraîne un certain "nettoyage" de la surface de roulement par les premières roues du véhicule, ce qui fait que les suivantes, si elles sont motorisées aussi, retrouvent une adhérence meilleure et peuvent transmettre un couple supérieur, procurant donc au véhicule une accélération ou une décélération globale meilleure.

- Cet avantage peut peut être devenir un inconvénient dans le cas de véhicules à accélération longue (locomotive par exemple), car il maintient un léger patinage des roues. Il sera possible d'y remédier en introduisant une temporisation au bout de laquelle on pourra diminuer volontairement le paramètre de réglage (par exemple $\alpha$) en lè calculant à partir d'une consigne de couple ou de courant abaissée à une valeur légèrement inférieure à la valeur du couple ou du courant que l'on avait obtenue pendant la temporisation et qui réprésente donc l'adhérence disponible. Ainsi le patinage s'arrêtera totalement et ensuite cette consigne de couple ou de courant servant au calcul théorique du paramètre de réglage sera réaugmentée progressivement jusqu 'à atteindre à nouveau la consigne d'entrée. La temporisation sera évidemment réinitialisée dès que le patinage s'arrête. Ce procédé d'antipatinage ou d'antienrayage a été décrit dans le cas d'une chaîne de traction à moteur à courant continu à excitation séparée et dans celui d'une chaîne à moteur asynchrone Il a déjà été dit qu'il s'appliquait au cas où plusieurs moteurs continus étaient alimentés en série (la f. c. e. m. à considérer est alors la somme de leurs f. c. é. m.) ou en parallèle, et au cas de moteurs asynchrones alimentés en parallèle. Il s'applique aussi évidemment au cas où le moteur à courant continu n'est pas alimenté par un hâcheur à partir d'une source continue, mais par un redresseur à partir d'une source alternative. La variable à considérer est alors l'angle d'ouverture du pont-redresseur. Le freinage, dans le cas d'un moteur à courant continu, peut être à récupération comme cela a été dessiné sur la figure 5, ou rhéostatique; la tension U à considérer est alors la tension aux bornes de la résistance de freinage. Ce procédé peut s'appliquer aussi aux chaînes de traction à moteurs à courant continu à excitation série. Mais la caractéristique de couple en fonction de la vitesse, représentée figure 7, est de la forme:

$$C = \frac{K}{vitesse^2} \quad à$$

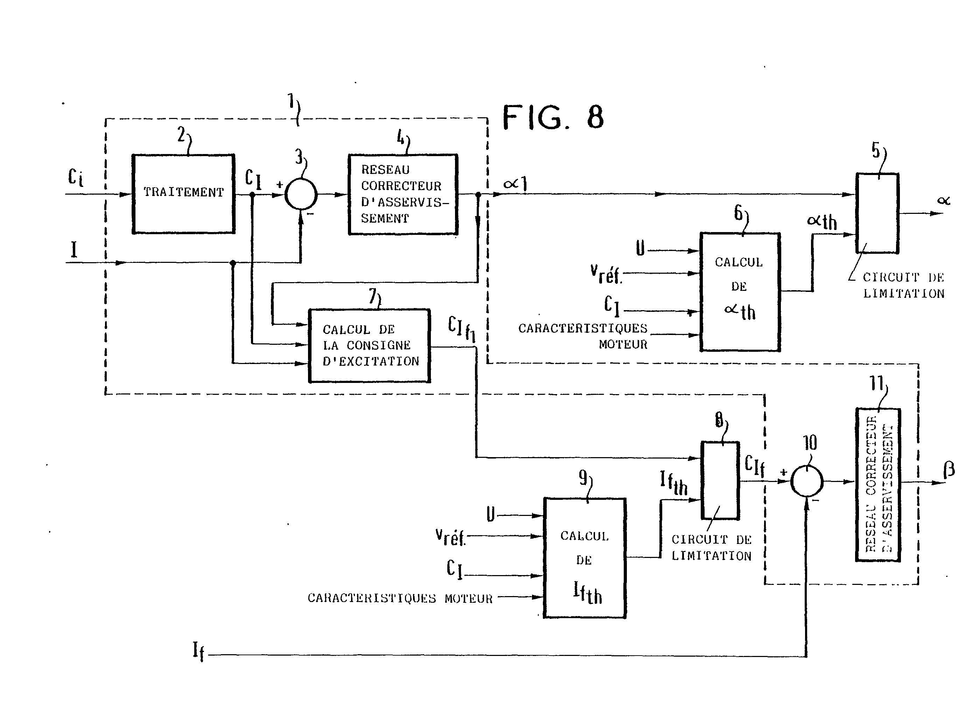

à tension d'alimentation constante, donc ne passe pas par zéro. En cas d'adhérence très mauvaise, le glissement peut donc être important. Enfin, de la même façon, ce procédé peut s'appliquer également à une chaîne de traction à moteurs synchrones autopilotés dont l'ensemble onduleur-moteur a la caractéristique d'un moteur à courant continu. On décrit maintenant, en relation avec la figure 8, un exemple de mise en oeuvre de ce procédé, correspondant au cas d'une chaîne de traction électrique à moteur à courant continu à excitation séparée. On distingue sur la figure 8 des moyens d'asservissement 1 réalisant de façon classique un pilotage de cette chaîne de traction par détermination des paramètres de réglage $\alpha$ et $\beta$ du moteur à partir d'une consigne d'entrée. Cette consigne d'entrée $c_i$, en provenance d'un manipulateur, est appliquée à un circuit de traitement 2 qui la transforme en une consigne de courant induit $C_1$ appliquée à un soustracteur 3 qui reçoit par ailleurs la mesure 1 du courant correcteur d'asservissement 4 fournissant sur une première sortie de ces moyens d'asservissement une valeur $\alpha_1$ du paramètre de réglage $\alpha$ Cette valeur $\alpha_1$ est appliquée à un circuit 5 de limitation par la valeur théorique $\alpha_{th}$fournie par un circuit de calcul 6, la sortie du circuit de limitation 5 fournissant alors le paramètre de réglage $\alpha$ qui est appliqué au moteur. La valeur de consigne $C_l$ (ou la mesure du courant induit 1) est également appliquée à un circuit 7 de calcul de consigne de courant d'excitation $C_{lf}$. Cette consigne de courant d'excitation, éventuellement limitée par un circuit 8 de limitation à la valeur théorique $If_{th}$ fournie par un circuit de calcul 9, est ensuite appliquée à un soustracteur 10 qui reçoit par ailleurs la mesure 1f du courant d'excitation, la sortie de ce soustracteur étant ensuite appliquée à un réseau correcteur d'asservissement 11 qui fournit le paramètre de réglage $\beta$ appliqué au moteur. Les éléments formant les moyens d'asservissement sont bien connus et ne seront donc pas redécrits ici. Les circuits de calcul 6 et 9 effectuent respectivement le calcul du rapport d'ouverture théorique $\alpha_{th}$ et le calcul du courant d'excitation théorique $I_{fth}$ conformément à la description ci-dessus. Dans le cas d'une chaîne fonctionnant en traction, le circuit de limitation 5 retient la plus petite des deux valeurs $\alpha_1$ et$\alpha_{th}$ qui lui sont appliquées, et le circuit de limitation 8 retient la plus grande des deux valeurs

$$C_{If_1} \quad et \quad If_{th}$$

qui lui sont appliquées.

L'architecture ainsi décrite reste valable en freinage, les traitements effectués par les moyens d'asservissement n'étant bien entendu pas les mêmes, comme cela est bien connu, et les calculs effectués par les circuits de calcul 6 et 9 étant alors à modifier conformément à la description ci-dessus. Les fonctions des circuits de limitation 5 et 8 sont par ailleurs modifiées, le circuit 5 retenant toujours la plus petite des deux valeurs $\alpha_1$ et $\alpha_{th}$ qui lui sont appliquées, mais le circuit 8 retenant ici la plus petite des deux valeurs

$$C_{If_1} \quad et \quad If_{th}$$

qui lui sont appliquées.

Le fonctionnement de ce système, en traction par exemple, est le suivant:

En l'absence de patinage, c'est-à-dire lorsque l'adhérence est suffisante pour transmettre tout le couple demandé, l'asservissement donne $\alpha_1 < \alpha_{th}$. Le rapport d'ouverture est donc égal à $\alpha_1$.

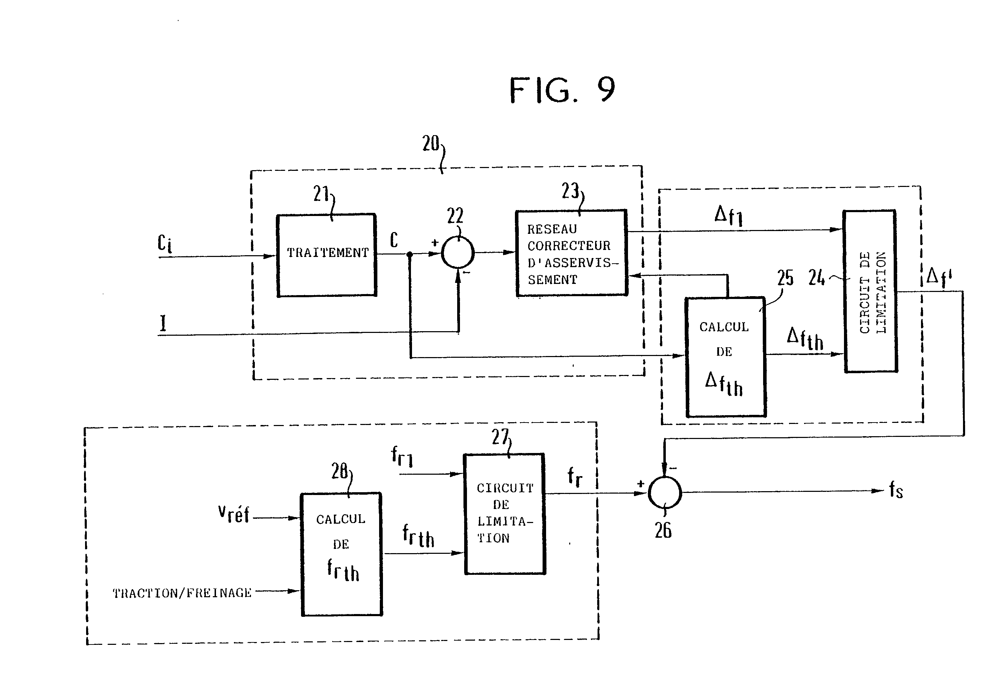

Lorsque l'adhérence devient plus faible, entraînant un patinage, donc une augmentation de la vitesse de rotation du moteur, le courant 1 a tendance à diminuer et l'asservissement augmente alors $\alpha_1$ (ou diminue $C_{lf1}$ si on est en conduction continue) pour maintenir 1 à la valeur de consigne $C_l$. Mais lorsque $\alpha_1$ dépasse $\alpha_{th}$ (ou que $C_{lf1}$ devient inférieur à lfth)' ce n'est plus $\alpha_1$ (ou $C_{lf1}$) qui sert à piloter l'électronique de puissance du moteur, mais $\alpha_{th}$ (ou $I_{fth}$). Ainsi le courant 1 diminue lorsque le patinage s'accroît, c'est-à-dire lorsque la vitesse du moteur, donc sa f.c.é.m, augmente, donc le couple diminue jusqu'à atteindre la valeur correspondant à l'adhérence disponible. Le glissement reste alors constant. Si l'adhérence redevient meilleure, le patinage décroît, donc la vitesse et la f.c.é.m. des moteurs diminuent, le courant (donc le couple) réaugmente jusqu'à devenir supérieur à la consigne $C_l$. Alors l'asservissement réagit en diminuant 1 (ou en augmentant $C_{lf1}$) de façon que I ne dépasse pas $C_l.\alpha_{th}$ et $I_{fth}$ redeviennent alors inactifs. Un exemple de réalisation d'un dispositif suivant l'invention, correspondant au cas d'une chaîne de traction électrique à moteurs asynchrones alimentés par un onduleur de tension est maintenant décrit en relation avec la figure 9. Ce dispositif comporte des moyens d'asservissemer réalisant de façon classique un pilotage de cette chaîne de traction par détermination du paramètre de réglage $\Delta f$ (glissa de ces moteurs à partir d'une consigne d'entrée. Cette consigne d'entrée, en provenance d'un manipulateur, est appliquée à un circuit de traitement 21 qui la transforme en une consigne C de couple ou de courant induit appliquée à

EP 0 427 138 A1

un soustracteur 22 qui reçoit par ailleurs la mesure du couple ou du courant induit. La correcteur d'asservissement 23 fournissant une valeur $\Delta f_1$ du paramètre de réglage $\Delta$ f. Cette valeur $\Delta f_1$ est appliquée à un circuit 24 de limitation par la valeur théorique $\Delta f_{th}$ correspondant à la consigne de couple et fournie par un circuit de calcul 25, la sortie du circuit de limitation 24 fournissant le paramètre de réglage $\Delta f$ qui est appliqué au moteur, après addition, ou soustraction, suivant que cette chaîne fonctionne en traction ou en freinage, dans un sommateur 26, au paramètre fr (fréquence de rotation du moteur). Ce paramètre $f_r$ est obtenu en sortie d'un circuit de limitation 27 qui reçoit d'une part la fréquence mesurée $f_{r1}$ de rotation du moteur, d'autre part une valeur théorique $f_{rth}$ de cette fréquence, correspondant à la vitesse de référence du véhicule et fournie par un circuit de calcul 28. Le paramètre de régalge $f_s$ obtenu en sortie du sommateur 26 est le paramètre de réglage qui est appliqué au moteur. Les éléments formant les moyens d'asservissement sont bien connus et ne seront donc pas redécrits ici. Les circuits de calcul et 28 effectuent respectivement le calcul du glissement théorique $f_{th}$ et le calcul de la fréquence de rotation théorique $f_{rth}$ conformément à ce qui a été décrit ci-dessus. Le circuit de limitation 24 retient la plus petite des deux valeurs $\Delta f_1$ et $\Delta f_{th}$ qui lui sont appliquées. Le circuit de limitation 27 retient la plus petite des deux valeurs $f_{r1}$ et $f_{rth}$ qui lui sont appliqués dans le cas d'une chaîne fonctionnant en traction, et la plus grande des deux dans le cas d'une chaîne fonotionnant en freinage. Des chaînes de traction autres que celles considérées ci-dessus à titre d'exemple pourraient bien entendu être envisagées. Par ailleurs, dans le cas des chaînes de tractionconsidérées ci-dessus, des réalisations autres que celles décrites ci-dessus à titre d'exemple pourraient également être envisagées. Les calculs de $\alpha_{th}$, $I_{fth}$, $f_{rth}$, $\Delta f_{th}$ pourraient ainsi être différents de ceux indiqués; par exemple ils pourraient être caiculés en fonction de la vitesse de référence par une fonction On peut également imaginer, comme cela a déjà été évoqué, une temporisation du procédé sans que cela ne change le principe même de l'invention. Une autre manière de procéder consiste à ne plus calculer les valeurs $\alpha_{th}$, $I_{fth}$, $f_{rth}$, $\Delta f_{th}$ mais à bloquer les sorties lfth' des asservissements lorsqu 'on détecte un patinage ou un enrayage (les capteurs des différents vitesses redeviennent alors nécessaires), et à les relibérer progressivement lorsque le patinage ou l'enrayage a disparu (ou est revenu à des valeurs tolérables). Le principe de l'invention peut par ailleurs être appliqué à la détection du patinage ou de l'enrayage des roues d'un véhicule à traction électrique. La détection de l'instant d'apparition du patinage ou de l'enrayage peut en effet être obtenue de façon très simple par détection de l'instant où les valeurs limitant les sorties de l'asservissement sont sélectionnées pour application au moteur, en remplacement de ces dernières. Le principe de l'invention peut également être utilisé pour obtenir de façon très simple une mesure d'adhérence des roues d'un véhicule à traction électrique. En effet, dans le cas où les valeurs limitant les sorties de l'asservissement sont constituées par les valeurs théoriques, en comparant la consigne de couple (ou de courant induit) au couple (ou au courant induit) réel, on sait de cette façon si l'adhérence disponible est supérieure ou égale à celle qui permet de transmettre le couple demandé ((as où le couple réel est égal à la consigne) ou inférieure (cas où le couple réel est inférieure à la consigne) et dans ce dernier cas le couple réel donne une image de l'adhérence disponible.

**Revendications**

1/ Procédé d'antipatinage ou d'antienrayage pour véhicule à traction électrique dont la chaîne de traction comporte un asservisssement d'un, ou de plusieurs, paramètre(s) de pilotage du, d'entrée, caractérisé en ce que le, ou les, paramètre(s) de pilotage obtenu(s) en sortie de cet asservissement sont limités en permanence par des valeurs, dites théoriques, de ce, ou ces, paramètre(s) de pilotage, qui sont celles qui permettraient d'obtenir la consigne d'entrée pour une vitesse de rotation du, ou des, moteur(s) égale à la vitesse réelle de déplacement du véhicule, appelée vitesse de référence, de façon à réaliser une stabilisation du couple transmis par ce ou ces moteurs en cas de patinage ou d'enrayage. 2/ Procédé selon la revendication 1, caractérisé en ce que le ou les paramètres de pilotage obtenus en sortie de cet asservissement sont limités en permanence à ces valeurs théoriques, de façon à réaliser, en cas de patinage ou d'enrayage, une stabilisation du couple transmis par ce ou ces moteurs à une valeur correspondant à celle que permet de transmettre l'adhérence disponible. 3/ Procédé selon l'une des revendications 1 et 2, caractérisé en ce que, dans le cas d'une chaîne de traction à moteur (s) à courant continu à excitation séparée, ledit paramètre de pilotage étant, en dessous de la vitesse de définition du moteur, le rapport d'ouverture du hâcheur d'induit, et, au dessus de la vitesse de définition du moteur, le rapport d'ouverture du hâcheur d'inducteur, et lesdites valeurs limitant en permanence le ou les paramètres de pilotage obtenus en sortie de l'asservissement de façon à réaliser une stabilisation du couple transmis par ce ou ces moteurs en cas de patinage ou d'enrayage étant appelées valeurs limitantes, le paramètre de pilotage appliqué au moteur a pour valeur, en dessous de la vitesse de définition du moteur, la plus petite, des deux valeurs, limitante d'une part et issue de l'asservissement d'autre part, et au-dessus de la vitesse

9

de définition du moteur, la plus grande, ou la plus petite, des deux valeurs, limitante d'une part et issue de l'asservissement d'autre part, suivant que cette chaîne fonctionne en traction ou en freinage. 4/ Procédé selon l'une des revendications 1 et 2, caractérisé en ce que, dans le cas d'une chaîne de traction à moteur (s) asynchrone (s) alimenté (s) par un onduleur de tension, ledit paramètre de pilotage étant la fréquence d'alimentation statorique du moteur, ledit asservissement consistant en un asservissement du glissement de fréquence de ce moteur, auquel est ensuite ajoutée la fréquence mesurée de rotation du moteur pour obtenir ladite fréquence d'alimentation statorique, et lesdites valeurs limitant en permanence le ou les paramètres de pilotage obtenus en sortie de l'asservissement, de façon à réaliser une stabilisation du couple transmis par ce ou ces moteurs en cas de patinage ou d'enrayage étant appelées valeurs limitantes, le paramètre de pilotage appliqué au moteur est obtenu en choisissant comme valeur de glissement la plus petite des deux valeurs, limitante d'une part et issue de l'asservissement d'autre part, et comme valeur de fréquence de rotation la plus petite, ou la plus grande, des deux valeurs, limitante d'une part et mesurée d'autre part, suivant que cette chaîne fonctionne en traction ou en freinage. 5/ Procédé d'antipatinage ou d'antienrayage pour véhicule à traction électrique dont la chaîne de traction comporte un asservissement d'un ou plusieurs paramètres de pilotage du ou des moteurs de cette chaîne à une consigne d'entrée, procédé comportant une détection préalable de patinage ou d'enrayage, caractérisé en ce qu'il comporte un blocage de la ou des sorties de cet asservissement en cas de détection de patinage ou d'enrayage. 6/ Procédé selon la revendication 5, caractérisé en ce que lesdites sorties des asservissements sont, après blocage, relibérées progressivement en cas de disparition du patinage ou de l'enrayage. 7/ Procédé selon la revendication 2, caractérisé en ce que au bout d'une durée déterminée au cours de laquelle la ou les valeurs théoriques ont été sélectionnées pour application au moteur en remplacement de la ou des sorties de cet asservissement, ces valeurs sont remplacées par des valeurs destinées à éviter le léger patinage entretenu par le fonctionnement à l'adhérence disponible. 8/ Procédé selon la revendication 7, caractérisé en ce que ces dernières valeurs sont constituées par des valeurs limitant en l'asservissement de façon à réaliser, en cas de patinage ou d'enrayage, une stabilisation du couple transmis à une valeur inférieure à la valeur que permet de transmettre l'adhérence disponible. 9/ Procédé selon la revendication 7, caractérisé en ce que ces dernières valeurs sont constituées par les sorties de l'asservissement auquel est alors appliqué une consigne abaissée à une valeur correspondant à la valeur du couple obtenue pendant ladite période déterminée. 10/ Application du procédé suivant l'une des revendications 1 à 4, ou 7 à 9, à la détection de patinage ou d'enrayage pour véhicule à traction électrique, caractérisé en ce que cette détection est obtenue par détection de l'instant où lesdites valeurs limitant en permanence le ou les paramètres de pilotage obtenus en sortie de l'asservissement de façon à réaliser une stabilisation du couple transmis par ce ou ces moteurs en cas de patinage ou d'enrayage, dites valeurs limitantes, sont sélectionnées pour application au moteur en remplacement de la ou des sorties de cet asservissement. 11/ Application du procédé selon la revendication 2 à la mesure d'adhérence pour véhicule à traction électrique, caractérisée en ce que cette mesure est obtenue par comparaison de la consigne de couple et du couple réellement obtenu, l'adhérence disponible étant supérieure ou égale à celle qui permet de transmettre la consigne de couple en cas d'égalité, ou inférieure à celle-ci au cas où le couple réel est inférieur à la consigne, le couple céel indiquant dans ce dernier cas l'adhérence disponible.

# FIG. 1

# FIG. 2

# FIG. 3

# FIG. 4

# FIG. 5

# FIG. 6

# FIG. 7

FIG. 8

# FIG. 9

EP 0 427 138 A1

Office européen
des brevets

**RAPPORT DE RECHERCHE
EUROPEENNE**

Numéro de la demande

**EP 90 12 1034**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 720 184 (HITACHI LTD)<br>* abrégé; figure 1 * | 1,3,5,10, 11 | B 60 L 3/10 |
| A | DE-A-3 714 404 (ASEA BROWN BOVERI AG)<br>* abrégé; figure 1 * | 1,3,5,10, 11 | |
| A | ELEKTRISCHE BAHNEN. vol. 84, no. 2, 1986, MUNCHEN DE pages 43 - 57; H.-P. BAUER ET AL: "OPTIMALE KRAFTSCHLUSSAUSNUTZUNG DURCH SELBSTADAP-TIERENDE RADSCHLUPFREGELUNG AM BEISPIEL EI-NES DREHSTROM-LOKOMOTIVANTRIEBES"<br>* page 48, alinéa 3.4 * | 1,5,10,11 | |
| D,A | FR-A-2 512 556 (FAIVELEY SA)<br>* le document en entier * | 1,10,11 | |

| DOMAINES TECHNIQUES RECHERCHES (Int. Cl.5) |
|---|
| B 60 L<br>B 61 C |

Le présent rapport de recherche a été établi pour toutes les revendications

| Lieu de la recherche | Date d'achèvement de la recherche | Examinateur |
|---|---|---|
| La Haye | 01 février 91 | BEYER F. |